# FASCICULE DE BREVET EUROPEEN

(11) **EP 3 111 116 B1**
(45) Date de publication et mention de la délivrance du brevet: **21.08.2019**
(21) Numéro de dépôt: 15714857.8
(22) Date de dépôt: 26.02.2015
(51) Int. Cl.: F16J 15/32

(54) **RÉDUCTION DU DÉBIT DE FUITE D'UN JOINT À BROSSE PAR OBSTRUCTION GÉOMETRIQUE FLEXIBLE**
REDUZIERUNG DER LECKAGEFLUSSRATE EINER BÜRSTENDICHTUNG DURCH FLEXIBLE GEOMETRISCHE BLOCKIERUNG
REDUCTION IN THE LEAKAGE FLOW RATE OF A BRUSH SEAL BY FLEXIBLE GEOMETRIC OBSTRUCTION

(30) Priorité: 28.02.2014 FR 1451633
(43) Date de publication de la demande: 04.01.2017
(73) Titulaire: Safran Aircraft Engines, 75015 Paris (FR)
(72) Inventeur: DETERRE, Geoffray, F-77550 Moissy-Cramayel Cedex (FR)
(74) Mandataire: Brevalex
(86) Numéro de dépôt international: PCT/FR2015/050455
(87) Numéro de publication internationale: WO 2015/128584

(56) Documents cités:
- EP-A1- 2 009 333
- EP-A2- 1 696 155

## Description

### DOMAINE TECHNIQUE ET ART ANTÉRIEUR

L'invention concerne le domaine des joints à brosse, utilisés dans les turbomachines, notamment les turbomachines terrestres ou aéronautiques, par exemple celles d'aéronefs tels que les turboréacteurs ou les turbopropulseurs. (voir EP-A-2009333)

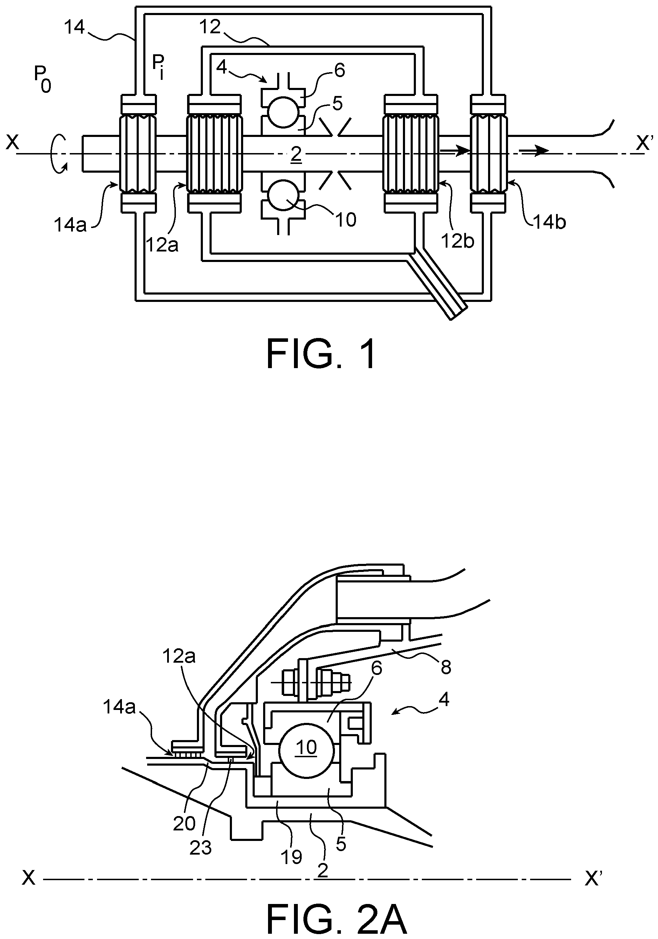

Comme illustré en figure 1, un palier d'arbre tournant 2 de turbomachine, qui tourne autour d'un axe longitudinal XX', est généralement constitué d'un roulement 4 formé d'une bague intérieure 5 reliée à l'arbre, d'une bague extérieure 6 reliée à une partie fixe (non représentée sur la figure) et d'éléments de roulement 10 disposés entre lesdites bagues. Ce palier est contenu dans une première enceinte 12 dont la fonction est de contenir l'huile servant à la lubrification du palier.

Une seconde enceinte 14 entoure la première enceinte 12 et a pour fonction de garantir l'étanchéité dynamique à l'interface entre l'enceinte et l'arbre. La pression Pₑ de l'air à l'extérieur de cette seconde enceinte est supérieure à la Pᵢ à l'intérieur de cette même seconde enceinte.

Chaque enceinte possède un système 12a, 12b, 14a, 14b de joints destiné à assurer son étanchéité.

Il est connu de réaliser l'étanchéité dynamique par des léchettes montées sur l'arbre en regard d'un matériau abradable solidaire de la partie fixe. Toutefois, pour des raisons d'encombrement et de performances (débit de fuite), la solution consistant à intégrer un dispositif de léchettes en contact avec un matériau abradable n'est pas applicable dans toutes les applications.

Par ailleurs, il est connu d'utiliser des joints à brosses, notamment métalliques, comme décrit dans le document WO2008/127244. En effet, du point de vue des performances, un joint à brosse métallique est supérieur à un dispositif de léchettes en contact sur un matériau abradable.

Un joint métallique ne doit pas être en contact avec de l'huile, car il la laisse passer rapidement. Il peut donc être intégré dans l'enceinte air-huile, mais au prix de modifications d'intégration. En effet un joint métallique nécessite des dispositifs mécaniques en aval dans l'enceinte air-huile afin d'éviter les projections d'huiles sur ledit joint. Ces dispositifs, tels que des flasques de protection ou des chicanes, réduisent l'intérêt d'un joint métallique en terme d'encombrement.

On cherche donc une nouvelle constitution pour un joint destiné à une enceinte de palier d'arbre tournant.

On recherche également à améliorer les performances d'un joint à brosse dans un environnement très compact, notamment dans le contexte d'une enceinte de palier d'arbre tournant d'une turbomachine.

### EXPOSÉ DE L'INVENTION

L'invention concerne d'abord un système de joint à brosse, par exemple pour une application en tant que joint air-huile d'un palier d'arbre d'une turbomachine, le joint comportant une nappe de poils en carbone, maintenue entre une première bague, dite bague avant, disposée en amont d'un flux d'air qui traverse le joint, et une deuxième bague, dite bague arrière, disposée en aval dudit flux d'air, la surface de la nappe de poils, qui est tournée vers la bague avant, étant munie d'un élément flexible non métallique permettant d'arrêter une partie dudit flux d'air qui circule à travers le joint, par exemple selon une direction sensiblement parallèle à un axe de rotation de l'arbre.

La première bague est destinée à être disposée en amont d'un flux d'air qui traverse le joint, et la deuxième bague, dite bague arrière, en aval de ce même flux d'air.

Dans le cas d'une application en tant que joint air-huile d'un palier d'arbre de turbomachine, une partie des poils du joint, du côté de la bague arrière, est destinée à être en contact avec une huile de lubrification dudit palier.

Selon l'invention, la pièce ou l'élément flexible permet d'arrêter la portion du flux d'air qui se dirigerait, sinon, vers la partie centrale de la nappe de poils, selon la direction d'extension longitudinale de celle-ci. Elle permet de limiter ce flux à la partie inférieure d'extrémité de cette nappe, c'est-à-dire à la portion de cette dernière qui est disposée du côté de sa partie libre, destinée à être en contact avec une surface tournante. L'air ne passe donc, principalement, que dans cette partie d'extrémité de la nappe. La flexibilité de l'élément flexible permet à celui-ci et à la nappe de se déformer sous l'effet du flux d'air.

Ledit élément flexible est en forme de couronne en matériau plastique, par exemple de type Kapton® ou PTFE.

L'élément flexible rayant une épaisseur comprise entre 0,05 mm et 0,5 mm.

Il peut par exemple laisser libre, soumise au flux d'air, une partie d'extrémité de la nappe, de longueur, mesurée dans le sens d'extension des poils de la nappe, comprise entre 0,1 mm et 2 mm.

Une enveloppe peut permettre de maintenir une extrémité des poils du joint, opposée à celle destinée à venir en contact avec une surface en rotation.

Selon une réalisation particulière, au moins une bague permet de maintenir une extrémité des poils du joint, opposée à celle destinée à venir en contact avec ladite surface en rotation.

Selon une réalisation, une bague, interne à l'enveloppe, permet de laisser passer la bague avant et la bague arrière. Une extrémité des poils du joint peut être en forme d'anneau et être entourée autour d'un noyau de section sensiblement circulaire.

Un système de joint selon l'invention a de préférence une configuration circulaire, par rapport à l'axe de rotation de l'arbre.

L'invention concerne également une enceinte de palier d'arbre de turbomachine comportant un système de joint selon l'invention.

Elle concerne également une turbomachine comportant une telle enceinte de palier d'arbre.

### BRÈVE DESCRIPTION DES DESSINS

- La figure 1 illustre très schématiquement un exemple d'enceinte de palier de rotor ou d'arbre tournant,
- la figure 2A illustre une réalisation d'une configuration d'enceinte de palier,
- la figure 2B représente un joint à brosse, maintenu entre une bague avant et une bague arrière,
- la figure 3 représente un joint à brosse, vu de face, maintenu par un système de bagues,
- la figure 4 représente une portion d'un joint à brosse et des moyens de fixation de ce joint,
- les figures 5A et 5B représentent schématiquement et respectivement, les débits d'air en amont et en aval d'un joint à brosse (figure 5A) et la répartition des efforts sur la nappe de poil d'un tel joint (figure 5B),
- la figure 6 représente une modélisation d'un écoulement d'air avec un joint maintenu avec un système du type de celui de la figure 2B,
- la figure 7A représente un joint et son système de maintien selon l'invention ainsi qu'un schéma de l'écoulement de l'air à travers un tel joint,
- la figure 7B représente un joint et son système de maintien selon la figure 2B ainsi qu'un schéma de l'écoulement de l'air à travers un tel joint,
- la figure 8 représente un joint muni, en aval, d'une pièce de protection non flexible.

### EXPOSÉ DÉTAILLÉ DE MODES DE RÉALISATION PARTICULIERS

On a représenté en figure 2A un schéma partiel d'une enceinte palier (telle qu'on en trouve dans les moteurs de type « CFM »® à laquelle peut être appliquée l'invention).

On retrouve, sur cette figure, des références numériques 2, 4 - 6, 10 identiques à celles de la figure 1, elles y désignent des éléments identiques ou similaires. La référence 8 désigne une partie fixe du dispositif à laquelle la bague extérieure 6 est reliée.

Par ailleurs, les références 12a, 14a désignent 2 joints, dont l'un (référence 12a) désigne un joint air - huile et l'autre (référence 14a) désigne un joint air-air. Le premier a une fonction d'étanchéité de la première enceinte 12 (figure 1), tandis que le deuxième assure l'étanchéité de la deuxième enceinte 14 (figure 1. La référence 19 (figure 2A) désigne un manchon solidaire de l'arbre 2, qui tourne lui-même autour de l'axe longitudinal XX'. Le manchon 19 est interposé entre cet arbre et la bague intérieure 5 du roulement 4. La référence 20 désigne la surface tournante par rapport à laquelle le joint forme d'étanchéité.

Le deuxième joint 14a est plutôt de type à léchette, en contact avec un matériau abradable.

Pour le premier joint 12a, on utilise un joint de type joint à brosse, dont les poils sont en carbone.

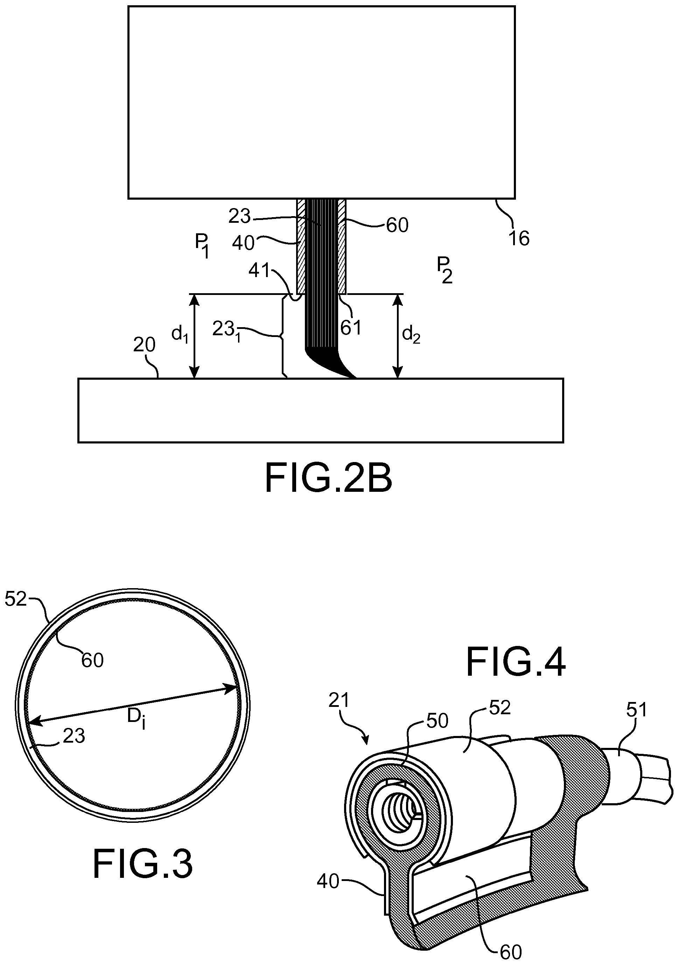

La figure 2B est une représentation schématique d'un tel joint 12a et de son système de maintien. Le joint est maintenu par une enveloppe 16 et comporte une nappe de poils 23 dont la première extrémité 23₁, qui est libre, est destinée à venir en contact avec la surface tournante 20, par rapport à laquelle il va permettre de réaliser une étanchéité.

Une partie des poils s'étend de manière sensiblement rectiligne.

La deuxième extrémité des poils, opposée à l'extrémité 23₁, est entourée par l'enveloppe 16, reliée en fait à la partie fixe 8 de la turbomachine. La forme de cette enveloppe peut varier, notamment en fonction de son intégration avec cette partie fixe. Généralement, la nappe de poils est maintenue, dans ou sur l'enveloppe 16, par frettage, ou vissage, ou collage, ou, de manière générale, par des moyens de maintien mécanique.

La deuxième extrémité des poils est maintenue par deux portions d'extrémité 40, 60 d'une bague interne de maintien des poils (non représentée sur cette figure) qui, comme on le voit sur la figure 2B, se prolonge le long d'une partie de la portion rectiligne des poils. Ces portions 40, 60 sont désignées, respectivement, par les expressions « bague avant » et « bague arrière ». Par rapport au flux d'air et à la pression de celui-ci, on entend par « avant » ou « amont » la partie du flux qui est à plus haute pression (P₁) et par « arrière » ou « aval » la partie du flux à plus faible pression (P₂).

Le joint est donc maintenu entre la bague avant 40 et la bague arrière 60, l'expression « jeu de bague avant » désignant la distance d₁ entre la surface 41 de la bague avant qui est la plus proche de la surface tournante 20. Le jeu de bague arrière désigne la distance d₂ entre la surface 61 de la bague arrière qui est le plus proche de la surface tournante 20.

Les figures 3 et 4 représentent, respectivement, une vue de face et une vue en perspective (partielle) d'un exemple de réalisation d'un tel joint et de son système de maintien 21 dans une configuration circulaire. Les poils 23 apparaissent à la périphérie interne du système de maintien 21 qui comporte, dans cet exemple, la bague interne 50 de maintien des poils et une bague 52 (ou tôle emboutie) de maintien de la bague interne. Typiquement, la valeur du diamètre interne Dᵢ d'un tel ensemble se situe entre 50 mm et 1000 mm. Le diamètre externe Dₑ se situe sensiblement dans la même gamme, avec, bien sûr Dₑ > Dᵢ. On voit également, sur la figure 4, une partie 51 appelée noyau interne et sur laquelle la nappe de poils est enroulée.

Les performances de ce type de joint ont été testées.

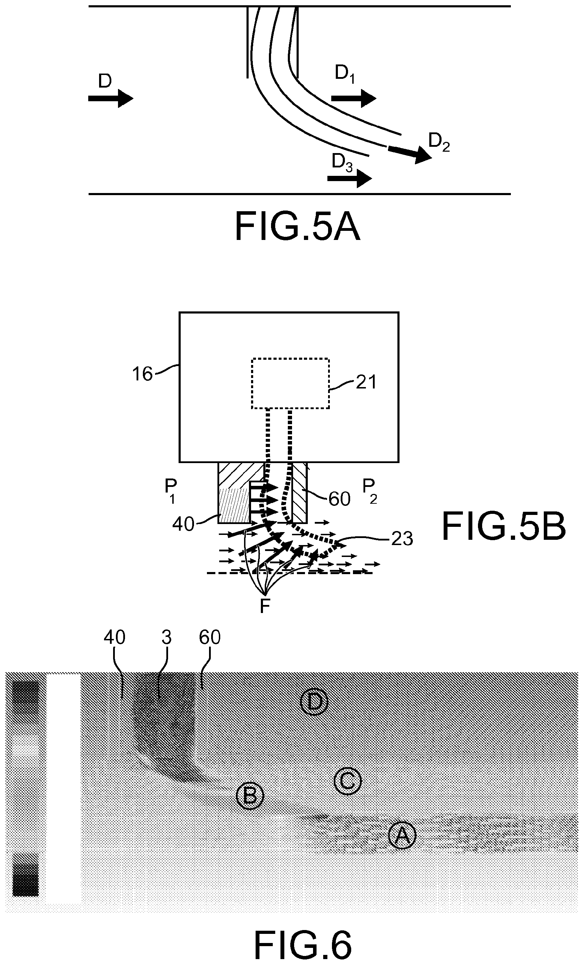

En particulier, on a pu établir, comme illustré sur la figure 5A, que le débit d'air D que laisse passer un tel joint se décompose en un débit d'air D1 qui passe à travers la nappe, un débit d'air D2 qui passe dans le bas de la nappe, et un débit d'air D3 qui passe sous la nappe. La figure 5B représente la répartition correspondante des efforts (flèches F) sur la nappe de poils. On voit que les efforts sont appliqués sur une grande partie de la surface de la nappe. Sur cette figure, l'enveloppe 16 permet l'assemblage des bagues avant 40 et arrière 60 par n'importe quel moyen connu (par exemple par vissage), comprenant un système de maintien 21 des poils 23 de la nappe.

On a représenté, en figure 6, et toujours pour le même type de joint, le résultat d'une simulation de l'écoulement d'air dans une nappe compressible, en contact avec la surface tournante, la variation de pression entre la pression amont P₁ et la pression aval P₂ étant de 1,4 bars. Les zones A, B sont les zones où la vitesse de l'air est la plus élevée, tandis que les zones C, D sont des zones de vitesse de l'air moins élevée.

On cherche à réduire le débit de fuite d'un tel joint.

Des solutions consistent à utiliser par exemple un flasque ou à mettre en oeuvre un collage. Mais ces solutions entraînent une réduction de la hauteur de la nappe, et donc un raidissement de celle-ci. À son tour, ce raidissement augmente l'effort de contact entre la surface tournante 20 et la nappe 3, ce qui a pour conséquence une augmentation de la vitesse d'usure du joint.

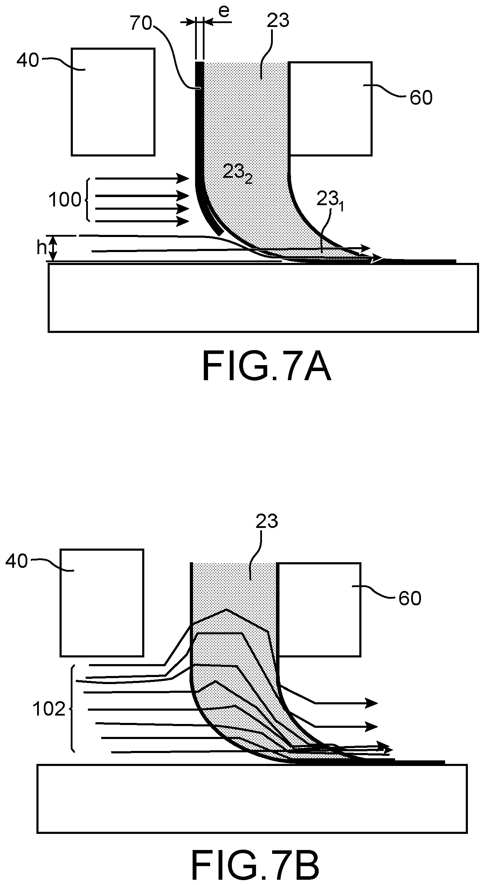

Un exemple de réalisation de l'invention, pour résoudre les problèmes ci-dessus, et notamment le problème de la réduction du débit de fuite, est illustré en figure 7A, sur laquelle on retrouve des références identiques à celle des figures précédentes pour désigner des mêmes éléments ou des éléments similaires, en particulier la nappe 23 de poils en carbone, positionnée entre la bague avant 40 et la bague arrière 60 (ces éléments ayant été déjà définis ci-dessus).

Comme on le voit sur cette figure, la surface du joint à brosse, qui est tournée vers la bague avant 40, est munie d'une pièce 70 flexible, non métallique, qui permet d'arrêter la portion du flux d'air qui se dirigerait, sinon, vers la portion centrale 23₁ de la nappe. La pièce 70 protège donc cette portion centrale 23₂ contre l'action du flux d'air. Elle est disposée entre la nappe 23 et la bague avant 40, du côté où la pression P₁ de l'air est la plus forte.

Cette pièce 70 est par exemple en un matériau plastique : en effet, ce type de matériau est compatible avec les températures rencontrées dans la zone concernée de l'enceinte 12 ; par ailleurs il est compatible avec les huiles présentes dans les enceintes et il n'est pas susceptible de provoquer des défauts dans les roulements en cas de dégradation (faible dureté). On peut prendre par exemple un matériau de type Kapton® ou PTFE.

Les propriétés de flexibilité de la pièce 70 permettent au joint de garder sa propre flexibilité, lors de son utilisation. En particulier, l'épaisseur de cette pièce 70 est suffisamment faible pour fléchir avec la nappe du joint, lors du fonctionnement de l'ensemble. L'épaisseur e de la pièce 70 est donc choisie pour maintenir la flexibilité souhaitée, tout en garantissant une limitation, aux endroits voulus, du débit d'air qui circule à travers le joint. A cette fin, cette épaisseur e peut se situer entre 0.01 et 1mm, de préférence entre 0.05 et 0.5mm.

Cette pièce 70 permet de limiter le débit d'air à la partie inférieure 23₁ de la nappe de poils, proche de la partie d'extrémité destinée à être en contact avec la surface tournante. Cette partie inférieure 23₁ est donc libre de la protection qui résulte de la présence de la pièce 70 devant la partie 23₂. La hauteur h (voir figure 7A) de cette partie « libre », mesurée dans le sens d'extension des fibres de la nappe, est par exemple comprise entre 0,1 mm et 2 mm.

Ainsi, on limite le débit d'air de fuite à travers le joint.

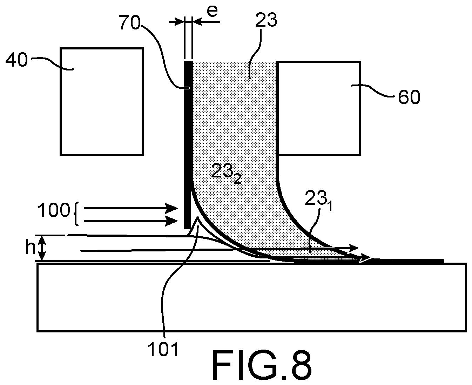

La figure 8 représente une situation dans laquelle la pièce 70 n'est pas flexible. Dans un tel cas, un tourbillon 101 se crée entre l'extrémité de cette pièce qui n'est pas en contact avec la nappe de poils 23 et cette dernière. Un tel effet réduit le gain apporté par la flexibilité dans le cas d'un système joint selon l'invention.

La pièce 70 peut être fixée par différents type de montage, de préférence à blocage mécanique. Mais elle n'est pas fixée contre la nappe de poils 3, par exemple par collage.

A titre de comparaison, on a représenté, en figure 7B, un joint ayant la constitution de la figure 2B, avec l'écoulement du flux d'air 102 correspondant. On voit que celui-ci traverse une bonne partie de la nappe 23, et se développe radialement (par rapport à l'axe XX') dans celle-ci, notamment dans la portion qui n'est pas traversée par le flux d'air lorsque le joint est équipé de la pièce ou de l'élément 70, comme décrit ci-dessus et illustré en liaison avec la figure 6A.

Comme déjà expliqué ci-dessus, la présence d'un joint à brosse selon l'invention est compatible avec la présence, en amont, d'un joint 14a de type « laby » (comportant une ou plusieurs léchettes et une ou des surfaces abradables correspondantes).

La présente invention s'applique particulièrement à une enceinte de palier de rotor ou d'arbre tournant, comme expliqué ci-dessus en liaison avec la figure 2A. Mais elle peut également être appliquée à un ensemble redresseur-compresseur en transposant, à un joint à brosse classique, le joint à brosse à haute performance suivant l'invention, l'extrémité de ce dernier étant alors en contact avec l'arbre d'un rotor et arrêtant une partie du flux d'air qui circule à travers le joint selon une direction sensiblement parallèle à l'axe de ce rotor.

## Revendications

1. Système de joint à brosse (3), pour une application en tant que Joint air-huile d'un palier d'arbre (2) d'une turbomachine, d'axe de rotation (XX') dans laquelle le joint exerce une étanchéité entre une première enceinte (12) contenant de l'huile et une deuxième enceinte (14) où la pression (P1) est plus forte que la pression (P2) dans la première enceinte (12), le joint comportant une nappe de poils (23) en carbone, maintenue entre une première bague, dite bague avant (40), disposée en amont d'un flux d'air qui traverse le joint, et une deuxième bague, dite bague arrière (60), disposée en aval dudit flux d'air, **caractérisé en ce que** la surface de la nappe de poils, qui est tournée vers la bague avant (40), est munie d'un élément flexible (70) non métallique, fléchissant avec la nappe de poils lors du fonctionnement et permettant d'arrêter une partie dudit flux d'air (100, 102) qui circule à travers le joint selon une direction sensiblement parallèle audit axe de rotation (XX'), ledit élément flexible étant en forme de couronne en matériau plastique, ayant une épaisseur comprise entre 0,05 mm et 0,5 mm, et laissant libre une partie d'extrémité de la nappe, de longueur, mesurée dans le sens d'extension des poils de la nappe, comprise entre 0,1 mm et 2 mm.

2. Système de joint à brosse selon la revendication 1, le plastique étant du Kapton®.

3. Système de joint à brosse selon la revendication 1, le plastique étant du PTFE.

4. Système de joint selon l'une des revendications 1 à 3, comportant des moyens de maintien (21), par exemple au moins une bague (50), pour maintenir une extrémité des poils de la nappe, opposée à celle destinée à venir en contact avec une surface tournante (20).

5. Système de joint selon la revendication 4, comportant une enveloppe (16) maintenant une extrémité de la nappe de poils, opposée à celle destinée à venir en contact avec une surface tournante (20).

6. Système de joint selon la revendication 5, dans lequel une bague (52), interne à l'enveloppe, permet de laisser passer la bague avant (40) et la bague arrière (60).

7. Système de Joint selon l'une quelconque des revendications précédentes, ce système ayant une configuration circulaire, par rapport à l'axe de rotation (XX').

8. Système de joint selon l'une quelconque des revendications précédentes, dans lequel une extrémité des poils du joint à brosse est en forme d'anneau et est entourée autour d'un noyau (51) de section sensiblement circulaire.

9. Enceinte (12) de palier d'arbre (2) d'une turbomachine comportant un système de joint selon l'une quelconque des revendications précédentes.

10. Turbomachine comportant une enceinte (12) de palier d'arbre (2) selon la revendication 9.

## Patentansprüche

1. Bürstendichtungs-System (3) für eine Anwendung als Luft-Öl-Dichtung eines Wellenlagers (2) eines Turbotriebwerks mit der Drehachse (XX'), bei dem die Dichtung zwischen einem ersten abgeschlossenen Raum (12), der Öl enthält, und einem zweiten abgeschlossenen Raum (14), in dem der Druck (P1) höher ist als der Druck (P2) in dem ersten abgeschlossenen Raum (12), eine Dichtigkeit herstellt, wobei die Dichtung aus einem Fasergewebe (23) aus Kohlenstoff besteht, das zwischen einem ersten Ring, vorderer Ring (40) genannt, der in Strömungsrichtung eines Luftstroms, der die Dichtung durchquert, aufwärts angeordnet ist, und einem zweiten Ring, hinterer Ring (60) genannt, der in Strömungsrichtung dieses Luftstroms abwärts angeordnet ist, festgehalten wird,
**dadurch gekennzeichnet,**
**dass** die Oberfläche des Fasergewebes, die dem vorderen Ring (40) zugewandt ist, mit einem nicht metallischen, elastischen Element (70) versehen ist, das sich in Betrieb mit dem Fasergewebe biegt und es ermöglicht, einen Teil des genannten Luftstroms (100, 102), der in einer im Wesentlichen parallel zu der genannten Drehachse (XX') verlaufenden Richtung durch die Dichtung hindurch zirkuliert, zu hemmen, wobei das genannte elastische Element kranzförmig aus Kunststoff ausgeführt ist, eine Stärke von 0,05 mm bis 0,5 mm hat und einen Endbereich des Gewebes in einer Länge von 0,1 mm bis 2 mm, gemessen in der Richtung, in der die Fasern des Gewebes verlaufen, frei lässt.

2. Bürstendichtungs-System nach Anspruch 1, bei dem der Kunststoff aus Kapton® besteht.

3. Bürstendichtungs-System nach Anspruch 1, bei dem der Kunststoff aus PTFE besteht.

4. Dichtungs-System nach einem der Ansprüche 1 bis 3, welches Haltemittel (21) enthält, beispielsweise mindestens einen Ring (50), um ein Ende der Gewebefasern festzuhalten, das sich entgegengesetzt zu dem Ende befindet, das dazu vorgesehen ist, in Kontakt mit einer drehenden Oberfläche (20) zu kommen.

5. Dichtungs-System nach Anspruch 4, das eine Umhüllung (16) aufweist, die ein Ende des Fasergewebes festhält, das sich entgegengesetzt zu dem Ende befindet, das dazu vorgesehen ist, in Kontakt mit einer drehenden Oberfläche (20) zu kommen.

6. Dichtungs-System nach Anspruch 5, bei dem ein Ring (52) im Inneren der Umhüllung so geformt ist, dass er den vorderen Ring (40) und den hinteren Ring (60) durchlässt.

7. Dichtungs-System nach einem der vorherigen Ansprüche, wobei dieses System bezogen auf die Drehachse (XX') kreisförmig gestaltet ist.

8. Dichtungs-System nach einem der vorherigen Ansprüche, bei dem ein Ende der Fasern der Bürstendichtung ringförmig gestaltet ist und um einen Kern (51) mit im Wesentlichen kreisförmigem Querschnitt gewickelt ist.

9. Abgeschlossener Raum (12) eines Turbotriebwerk-Wellenlagers (2), der ein Dichtungs-System nach einem der vorherigen Ansprüche aufweist.

10. Turbotriebwerk, das einen abgeschlossenen Raum (12) eines Wellenlagers (2) nach Anspruch 9 aufweist.

## Claims

1. Brush seal system (3), for application as an air/oil seal of a shaft bearing (2) of a turbomachine, with an axis of rotation (XX') in which the seal exerts a sealing between a first enclosure (12) containing oil and a second enclosure (14) in which the pressure (P1) is higher than the pressure (P2) in the first enclosure (12), with the seal comprising a layer of carbon bristles (23), held between a first ring, referred to as the front ring (40), disposed upstream of a flow of air that passes through the seal, and a second ring, referred to as the rear ring (60), disposed downstream of said flow of air, **characterised in that** the surface of layer of bristles, which is turned towards the front ring (40), being provided with a non-metal flexible element (70) that flexes with the layer of bristles during the operation and that makes it possible to stop a portion of said flow of air (100, 102) that flows through the seal in a direction substantially parallel to said axis of rotation (XX'), said flexible element being in the form of a crown made of plastic material, having a thickness between 0.05 mm and 0.5 mm, and leaving free an end portion of the layer, of a length, measured in the direction of the extension of the bristles of the layer, between 0.1 mm and 2 mm.

2. Brush seal system according to claim 1, the plastic material being Kapton®.

3. Brush seal system according to one of claims 1, the plastic material being PTFE.

4. Seal system according to one of claims 1 to 3, comprising means for holding (21), for example at least one ring (50), for holding an end of the bristles of the layer, opposite that intended to come into contact with a rotating surface (20).

5. Seal system as claimed in claim 4, comprising an envelope (16) that holds an end of the layer of bristles, opposite that intended to come into contact with a rotating surface (20).

6. Seal system as claimed in claim 5, wherein a ring (52), internal to the envelope, makes it possible to allow the front ring (40) and the rear ring (60) to pass.

7. Seal system according to any one of the preceding claims, with this system having a circular configuration, in relation to the axis of rotation (XX').

8. Seal system according to any one of the preceding claims, wherein an end of the bristles of the brush seal is in the shape of a ring and is surrounded around a core (51) with a substantially circular section.

9. Enclosure (12) of a shaft bearing (2) of a turbomachine comprising a seal system according to one of the preceding claims.

10. Turbomachine comprising an enclosure (12) of a shaft bearing (2) according to claim 9.
